# EUROPÄISCHE PATENTANMELDUNG

(11) **EP 2 711 120 A1**
(43) Veröffentlichungstag der Anmeldung: **26.03.2014**
(21) Anmeldenummer: 12185075.4
(22) Anmeldetag: 19.09.2012
(51) Int. Cl.: B23K 9/02, B23K 31/02, B23K 37/02, G05B 19/401, B25J 9/00

(54) **Verfahren und Vorrichtungen zum im Wesentlichen automatischen Bearbeiten, insbesondere Schweißen sehr großer Werkstücke**

(71) Anmelder: Richter Maschinenfabrik AG, 37235 Hessisch Lichtenau (DE)
(72) Erfinder: Richter, Axel, 37235 Hessisch Lichtenau (DE)
(74) Vertreter: Walther, Walther & Hinz GbR

(57) **Zusammenfassung**

Die vorliegende Erfindung betrifft ein Verfahren und eine Vorrichtung (1) zum im Wesentlichen automatischen Bearbeiten, insbesondere Schweißen sehr großer Werkstücke. Unter Einsatz wenigstens einer Abtast- und/oder Bearbeitungseinrichtung weist das Verfahren die folgenden Schritte auf:
- Scannen des Werkstücks (21) durch den Roboter (11) und Erzeugen eines dreidimensionalen Datenbildes;
- Erzeugen der Daten der Schweißnahtbahn der Nahtwurzel der gewünschten Schweißverbindung anhand des dreidimensionalen Datenbildes;
- Schweißen einer ersten Schweißnahtlage der Nahtwurzel von einer Seite mittels Roboter anhand der erzeugten Daten;
- Fugen bzw. Fasen, insbesondere Fräsen der Nahtwurzel! der Schweißverbindung mittels Roboter auf der Gegenseite;
- Schweißen der ersten Schweißnahtlage der Gegenlage der Nahtwurzel mittels Roboter;
- Scannen der erzeugten Schweißnaht durch den Roboter und Erzeugen eines dreidimensionalen Datenbildes;
- Erzeugen der nächsten Schweißnahtbahn für den Roboter anhand des erzeugten dreidimensionalen Datenbildes der vorher erzeugten Schweißnahtbahn, gegebenenfalls nach Korrektur der Schweißnahtbahndaten aufgrund einer Abweichung von Nahtlage und/oder Nahtform und Schweißen der nächsten Schweißnahtlage;
- Wiederholen der Schritte des Scannens der erzeugten Schweißnahtlage, des Erzeugens der nächsten Schweißnahtbahn gegebenenfalls nach Korrektur des Lagenaufbaus anhand der ermittelten Abweichungen und Schweißen der nächsten Schweißnahtlage bis zum vollständigen Lagenaufbau der zu erzeugenden Schweißnaht.
Die Vorrichtung (1) ist insbesondere zu Durchführung des Verfahrens geeignet.

## Beschreibung

Die vorliegende Erfindung betrifft ein Verfahren und eine Vorrichtung zum im Wesentlichen automatischen Bearbeiten, insbesondere Schweißen sehr großer Werkstücke.

In den letzten Jahren gab es eine steigende Nachfrage nach Großbauteilen, also sehr großen Werkstücken, insbesondere im Bereich der Energiewende durch Umschwenken auf Energieträger mit geringer Energiedichte, wie z. B. Windräder. Diese sehr großen Werkstücke werden aus Einzelteilen aus Stahl zusammengesetzt, was sehr hohe Arbeitsumfänge oder lange Bearbeitungszeiten bisher erfordert. Das Zusammenfügen der Einzelelemente dieser sehr großen Werkstücke erfolgt im Wesentlichen durch Schweißen, wobei beispielsweise der Umfang der Schweißarbeit an einer Windradgondel ca. 530 Stunden beträgt.

Sehr große Werkstücke, beispielsweise mit einer Länge von über 30 m und/oder einer Höhe von mehreren Metern haben den Nachteil, dass es für den Schweißbearbeiter sehr schwierig ist, Schweißnähte mit der geforderten Qualität sowohl über eine sehr große Länge als auch unter ungünstigen Bedingungen in mehreren Metern Höhe am Werkstück auszuführen. Da die Qualitätsanforderungen an das Schweißergebnis sehr hoch sind, werden zusätzlich regelmäßige Prüfungen mittels Ultraschall oder Röntgen durchgeführt und fehlerhafte Schweißnähte müssen entsprechend ausgebessert werden.

In der Fertigung von Bauteilen aus Metall werden vielfach Schweißroboter eingesetzt, diese haben jedoch nur eine begrenzte Reichweite von beispielsweise 2,5 m. Durch Portalbauweise kann diese Reichweite erhöht werden, was jedoch zu einer deutlichen Senkung der Flexibilität durch große Strukturen zur Bewegung des Roboters führt. Das Einbringen langer Schweißnähte für die oben angegebenen großen Bauteile ist mit diesen Schweißrobotern somit nicht möglich.

Bei kleinen Losgrößen an zu erstellenden Werkstücken oder sogar bei der Fertigung von Einzelteilen ist auch der hohe Aufwand der Programmierung einzelner Schweißroboter nachteilig, so dass bisher die Fertigung manuell erfolgte.

Der vorliegenden Erfindung liegt deshalb die Aufgabe zugrunde, ein Verfahren und eine Vorrichtung zum im Wesentlichen automatischen Bearbeiten, insbesondere Schweißen sehr großer Werkstücke bzw. Bauteile zu schaffen, wodurch diese sehr großen Werkstücke voll automatisch bearbeitet werden können und insbesondere eine integrierte Automatisierung aller Teilprozesse erreicht wird.

Diese Aufgabe wird durch die Merkmale der Ansprüche 1 bzw. 9 gelöst.

Unter Einsatz wenigstens einer Abtast- und/oder Bearbeitungseinrichtung, insbesondere wenigstens einem Abtast- und/oder Bearbeitungsroboter, der an einer Aufnahmevorrichtung befestigbar ist, wobei die Aufnahmevorrichtung an einer Mehrzahl von bewegbaren Seilen aufgehängt und mittels dieser in eine beliebige Position in einem Arbeitsraum bewegbar ist, indem sich wenigstens eines der zu bearbeitenden großen Werkstücke befindet, weist das Verfahren die folgenden Schritte auf:
- Scannen des Werkstücks durch den Roboter und Erzeugen eines dreidimensionalen Datenbildes;
- Erzeugen der Daten der Schweißnahtbahn der Nahtwurzel der gewünschten Schweißverbindung anhand des dreidimensionalen Datenbildes;
- Schweißen einer ersten Schweißnahtlage der Nahtwurzel von einer Seite mittels Roboter anhand der erzeugten Daten;
- Fugen bzw. Fasen, insbesondere Fräsen der Nahtwurzel der Schweißverbindung mittels Roboter auf der Gegenseite;
- Schweißen der ersten Schweißnahtlage der Gegenlage der Nahtwurzel mittels Roboter;
- Scannen der erzeugten Schweißnaht durch den Roboter und Erzeugen eines dreidimensionalen Datenbildes;
- Erzeugen der nächsten Schweißnahtbahn für den Roboter anhand des erzeugten dreidimensionalen Datenbildes der vorher erzeugten Schweißnahtbahn, gegebenenfalls nach Korrektur der Schweißnahtbahndaten aufgrund einer Abweichung von Nahtlage und/oder Nahtform und Schweißen der nächsten Schweißnahtlage;
- Wiederholen der Schritte des Scannens der erzeugten Schweißnahtlage, des Erzeugens der nächsten Schweißnahtbahn gegebenenfalls nach Korrektur des Lagenaufbaus anhand der ermittelten Abweichungen und Schweißen der nächsten Schweißnahtlage bis zum vollständigen Lagenaufbau der zu erzeugenden Schweißnaht.

Dadurch wird vorteilhafter Weise eine integrierte Automatisierung aller Teilprozesse des Schweißvorganges erreicht: Schweißen der Nahtwurzel, Fugen oder Fasen der Nahtwurzel, kompletter Lagenaufbau der Mehrlagenschweißnaht.

Es wird darauf hingewiesen, dass bei diesen Großbauteilen, eine Schweißnaht mehrere Dutzend Schweißnahtlagen und sogar mehrere Hundert Schweißnahtlagen aufweisen kann, so dass bei der Automatisierung des Schweißprozesses ein kontinuierliches, qualitatives und Zeit sparendes Arbeitsergebnis erzielt werden kann.

Ein weiterer großer Vorteil ergibt sich aus der sensoriellen Erfassung der Nahtgeometrie durch die Abtasteinrichtung bzw. den Abtastroboter. Auf ein Nachteachen der Bahnpunkte kann verzichtet werden. Weiterhin ist vorteilhaft, dass an die Scanfahrt nur geringe Genauigkeitsanforderungen zu stellen sind, da berührungslose Sensoren zum Einsatz kommen können.

Aus den gescannten Daten bzw. den Sensordaten durch den Roboter kann eine voll automatische Erstellung des Wurzelanschlusses erfolgen durch Erzeugung der Schweißnahtbahn und dem Fugen der Wurzellage mittels Frässpindel und anschließendem Schweißen der Gegenlage. Erfindungsgemäß schafft das Verfahren auch die vollautomatische Erstellung des Vollanschlusses durch sensorielle Erfassung von Abweichungen der Nahtvorbereitung und sensorielle Erfassung von Abweichungen im Lagenaufbau. Abweichungen können bedingt sein durch abweichende Breite der Schweißnaht und die Geschwindigkeit der Drahtzufuhr.

Mit anderen Worten: das Fugen durch den Bearbeitungsroboter mit Frässpindel erlaubt die automatische Herstellung des Wurzelanschlusses, also der Nahtwurzel mit dem Schweißroboter. Die Scandaten des Roboters werden durchgängig für die komplette Prozesskette verwendet: Fugen - Wurzelanschluss - Lagenaufbau.

Durch das Scannen der erzeugten Schweißnaht durch den Roboter und Erzeugen eines dreidimensionalen Datenbildes können die aufgetretenen Abweichungen erfasst werden und eine entsprechende Korrektur des Lagenaufbaus erstellt und dem Schweißroboter für das Schweißen der nächsten Schweißnahtlage übermittelt werden. Dies schafft den großen Vorteil der vollautomatischen Schweißnahterzeugung, wobei durch den Robotereinsatz auch eine entsprechende geforderte Nahtqualität erzielbar ist. Die Notwendigkeit des Nacharbeitens aufgrund manueller Fertigung kann dadurch drastisch reduziert werden. Dadurch, dass das Scannen optisch und berührungsfrei erfolgt, kann eine Erfassung in sehr kurzer Zeit durchgeführt werden, weil die Bewegung der Aufnahmevorrichtung für den Abtastroboter bei erheblicher Geschwindigkeit erfolgen kann und keine hohe Genauigkeit des Roboters relativ zum Werkstück erforderlich ist.

Zum Aufbau einwandfreier Schweißnahtlagen werden die erzeugten Schweißnahtlagen nach vorbestimmten Intervallen gereinigt bzw, genagelt und/oder auf deren Güte überprüft. Unter "Nageln" versteht man einen Vorgang mittels einer Vorrichtung, die einen mit Nägeln besetzten Kopf aufweist und unter einer vorbestimmten Frequenz auf die Schweißnaht stößt, wodurch Verunreinigungen bzw. Oxidationsschichten abgelöst werden.

Das Verfahren zum im Wesentlichen automatischen Bearbeiten sehr großer Werkstücke bzw. Bauteile kann neben dem Schweißen und Fugen auch noch weitere Bearbeitungsvorgänge umfassen. Diese können vorteilhafter Weise sein: Brennen, Flexen der Nahtwurzel, Schleifen der Schweißnahtlagen bzw. des Werkstücks, Strahlen, insbesondere Sandstrahlen des Werkstücks, Lackieren des Werkstücks, Spritzverzinken des Werkstücks, Fräsen des Werkstücks, Bohren oder Schrauben des Werkstücks.

Grundsätzlich ist es mit dem erfindungsgemäßen Verfahren möglich, jegliche mechanische Bearbeitung mittels des wenigstens einen Bearbeitungsroboters anhand der erfassten dreidimensionalen Daten des Werkstücks auszuführen.

Wie weiter unten noch näher erläutert wird, besteht eine mehrlagige Schweißnaht aus mehreren Lagen auf beiden Seiten der Nahtwurzel: Befinden sich an der Aufnahmevorrichtung mehr als ein Roboter, beispielsweise zwei Roboter, können die Schweißnahtlagen auf beiden Seiten der Nahtwurzel praktisch gleichzeitig erfasst und/oder bearbeitet werden.

Ein besonders großer Vorteil ergibt sich dadurch, dass das Scannen des Werkstücks unter Zuhilfenahme der CAD-Daten des Werkstücks erfolgen kann. Dies führt zu einer äußerst vereinfachten Programmierung, da bereits die erste Messphase aus den CAD-Daten erstellt werden kann. Die Abweichungen des CAD-Modells von dem realen Bauteil können anhand der Messdaten erfasst werde. Weiterhin kann das Scannen des Werkstücks durch Handführen der Abtasteinrichtung erfolgen.

Gemäß der erfindungsgemäßen Vorrichtung zum im Wesentlichen automatischen Bearbeiten, insbesondere zum Schweißen sehr großer Werkstücke und insbesondere zum Durchführen des erfindungsgemäßen Verfahrens, weist diese folgende Merkmale auf:
eine Aufnahmevorrichtung für wenigstens eine Abtasteinrichtung und/oder wenigstens eine Bearbeitungseinrichtung, insbesondere für wenigstens einen Abtast- und/oder Bearbeitungsroboter, die mittels einer Mehrzahl von steuerbaren Seilen in einem Bearbeitungsraum aufgehängt und mittels der Seile in beliebige Stellungen in dem Bearbeitungsraum verfahrbar ist, wobei die wenigstens eine Abtastvorrichtung in der Lage ist, das Werkstück abzutasten und ein dreidimensionales Datenbild davon zu erstellen,
eine Programmier- und Steuereinrichtung, welche die erfassten dreidimensionalen Daten in entsprechende Bearbeitungsdaten umwandelt und diese dem wenigstens einen Bearbeitungsroboter und der Steuerung der Seile überträgt, der die gewünschte Bearbeitung des Werkstücks anhand dieser Daten ausführt.

Mit der erfindungsgemäßen Vorrichtung wird der besonders große Vorteil erreicht, dass eine äußerst schnelle Programmierung der Schweißnaht beispielsweise in weniger als zwei Minuten möglich ist. Durch die Möglichkeit der sensorbasierten Korrektur der Abweichung von Nahtlage und Nahtform ist es nicht mehr notwendig aufgrund von Bauteilabweichungen eine Nachprogrammierung vorzunehmen, da die Programmiereinrichtung diese Korrektur selbst durchführt.

Vorteilhafter Weise wird jedes Seil über einen zugeordneten Motor, insbesondere eine Kran- oder Seilwinde bewegt, welcher bzw. welche durch die Steuereinrichtung gesteuert wird. Derartige Kran- bzw. Seilwinden können exakt gesteuert werden, wobei sie zusätzlich hohe Aufwickel- bzw. Abwickelgeschwindigkeiten erreichen können.

Dadurch, dass die Seile an einem Gestell aufgehängt und/oder an Wänden eines Gehäuses bzw. einer Halle aufhängbar sind und sich der Bearbeitungsraum innerhalb des Gestells und/oder des Gehäuses bzw. der Hallen befindet, wird auf eine einfache Weise der Einsatz der erfindungsgemäßen Vorrichtung möglich. Dies entweder durch Aufbau eines einfachen, jedoch stabilen Gestells oder durch Nutzen der bestehenden Hallenstruktur, was die nachträgliche Einrichtung der erfindungsgemäßen Vorrichtung in bestehende Gebäude ohne Probleme ermöglicht. Vorteilhafterweise sind wenigstens sieben Seile vorgesehen, die an der Aufnahmevorrichtung angreifen, wobei einige davon oberhalb und die restlichen davon unterhalb der Aufnahmevorrichtung aufgehängt bzw. aufhängbar sind. Bevorzugt wird eine Aufteilung von vier oberhalb und vier unterhalb aufgehängt bzw. aufhängbar gewählt. Dadurch wird eine äußerst stabile Lagepositionierung der Aufnahmevorrichtung geschaffen, welche zudem schwingungsarm bzw. schwingungsfrei bewegbar ist und in der Lage ist, eine Anpresskraft mittels des Bearbeitungsroboters auf das Werkstück aufzubringen, wie es beispielsweise beim Fräsen oder Bohren notwendig ist. Ein besonderer Vorteil ergibt sich, wenn die Seile gegeneinander verspannt sind, wodurch die Aufnahmevorrichtung besonders effizient an einer pendelnden Bewegung gehindert wird.

Erfindungsgemäß kann der Bearbeitungsroboter als ein Schweißroboter, ein Fräsroboter, ein Sandstrahlroboter, ein Schleifroboter, ein Lackierroboter, ein Spritzverzinkroboter, ein Bohrroboter, ein Brennroboter und/oder als ein Handhabungsroboter ausgebildet sein. Grundsätzlich ist jede Roboterapplikation möglich, wie auch Montagebänder oder Schraubroboter.

Herkömmlicherweise werden lange Werkstücke im Wesentlichen in der Horizontalen verschweißt. Dies wird auch überwiegend bei einer Ausführungsform der vorliegenden Erfindung stattfinden. Gemäß der vorliegenden Erfindung ist es jedoch auch möglich, lange Bauteile in der Vertikalen zu verschweißen, was durch eine entsprechende Aufspannung der Seile in einem hierzu angepassten Gestell ermöglicht wird. Grundsätzlich ist es mit der erfindungsgemäßen Vorrichtung möglich, unterschiedlichste Winkellagen der Hauptbewegung der Abtast- und/oder Bearbeitungsvorrichtung zu verwirklichen.

Vorteilhafterweise ist der Abtastroboter als ein optischer berührungsfreier Abtastroboter ausgebildet. Dadurch kann eine entsprechend schnelle Erfassung der Geometrie des großen Werkstücks und der daran auszuführenden Bearbeitungsstellen ermittelt werden.

Weiterhin ist besonders vorteilhaft, dass die Steuereinrichtung eine Programmiereinrichtung umfasst, welche anhand der erfassten geometrischen Daten des Werkstücks, insbesondere der geometrischen Daten der zu bearbeitenden Elemente die auszuführenden Bearbeitungsbahnen bzw. Bearbeitungsvorgänge erzeugt und dem wenigstens einen Bearbeitungsroboter überträgt.

Vorteilhaft ist gemäß einer Ausführungsform der Erfindung auch, dass die Aufnahmevorrichtung in Form einer Plattform ausgebildet ist, die zusammen mit der/den Abtast- und/oder Bearbeitungsvorrichtung/en leicht ausgetauscht werden kann. Die Beweglichkeit und Zugänglichkeit der Abtast- und Bearbeitungsvorrichtungen lässt sich durch Verschieben oder Auswechseln der Seilwinden, die beispielsweise in schienen geführt sind, anpassen.

Weitere Merkmale, Einzelheiten und Vorteile der vorliegenden Erfindung ergeben sich aus der nachfolgenden Beschreibung von beispielhaft angegebenen Ausführungsformen der vorliegenden Erfindung, die in den beigefügten Zeichnungen dargestellt sind. Darin zeigt:
- Fig. 1: eine perspektivische schematische Ansicht einer erfindungsgemäßen Vorrichtung zum im Wesentlichen automatischen Bearbeiten, insbesondere Schweißen sehr großer Werkstücke;
- Fig. 2: in schematischer Ansicht die prinzipielle Erstellung einer Schweißnaht beginnend mit der Nahtwurzel, eingebracht von einer Seite;
- Fig. 3: das Fugen der Nahtwurzel mittels Fräser;
- Fig. 4: den schematischen Aufbau einer Schweißnaht mit einer Mehrzahl von Schweißnahtlagen auf einer Seite der Schweißverbindung und
- Fig. 5: eine alternative Ausführungsform der Anbringung der Aufnahmevorrichtung der erfindungsgemäßen Bearbeitungsvorrichtung.

In den beigefügten Zeichnungen sind gleiche Elementen mit den gleichen Bezugsziffern bezeichnet.

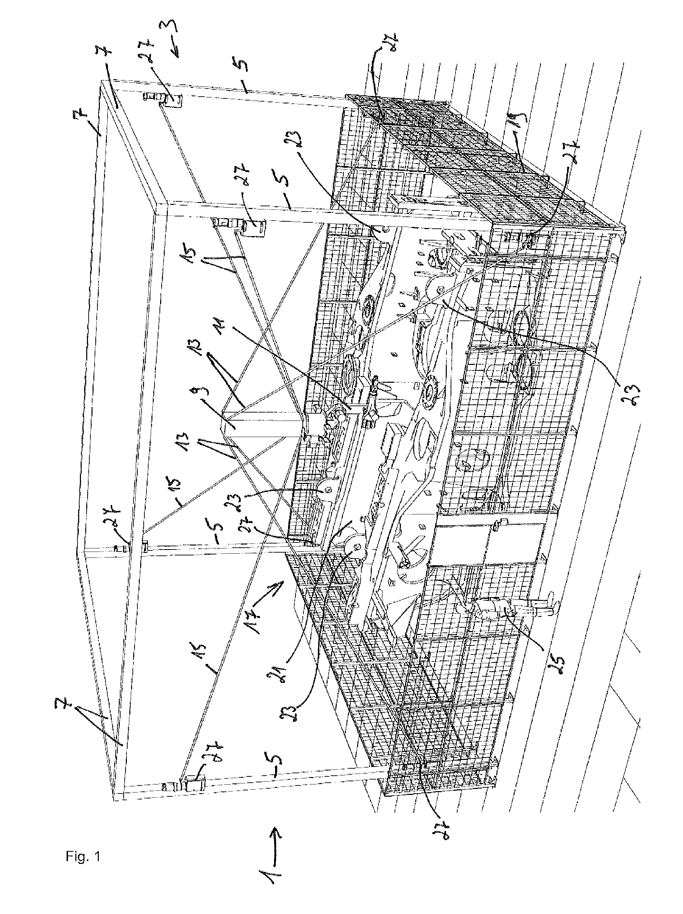

In Fig. 1 ist in perspektivischer Ansicht eine erste Ausführungsform der erfindungsgemäßen Vorrichtung zum im Wesentlichen automatischen Bearbeiten sehr großer Werkstücke dargestellt. Die Vorrichtung 1 umfasst ein Gestell 3, das in einem Rechteck angeordnete Längsstreben 5 in den vier Ecken des Rechtecks und die Längsstreben 5 verbindende Querstreben 7 am oberen Ende der Längsstreben 5 aufweist.

Das Gestell 3 dient als Tragstruktur zur Aufhängung einer Aufnahmevorrichtung 9 an deren unterem Ende eine Bearbeitungsvorrichtung 11 gegebenenfalls lösbar mit der Aufnahmevorrichtung 9 verbunden ist. Die Bearbeitungsvorrichtung ausgebildet als Bearbeitungsroboter 11 ist dabei so ausgestaltet, dass sie sich gemäß einer Mehrzahl von Freiheitsgraden Bewegen kann.

Die Aufnahmevorrichtung ist mit acht Seilen verbunden und in dem Gestell 3 aufgehängt. In der in Fig. 1 dargestellten Ausführungsform sind vier Seile 13 am oberen Ende der Aufnahmevorrichtung 9 befestigt und erstrecken sich in den unteren Bereich einer zugeordneten Längsstrebe 5, an der sie angehängt bzw. angelenkt sind. Vier Seile 15 sind am unteren Ende der Aufnahmevorrichtung 9 an dieser befestigt und erstrecken sich zu dem oberen Bereich der jeweils zugeordneten Längsstrebe 5 und sind an dieser angehängt bzw angelenkt.

Innerhalb des Gestells 3 befindet sich ein Bearbeitungsraum 17, der von einem Schutzgitter 19 seitlich eingerahmt wird. In dem Bearbeitungsraum 17 befindet sich ein großes Werkstück bzw. Bauteil 21, an dem verschiedene Bearbeitungen vorgenommen werden sollen bzw. vorgenommen worden sind, wie beispielsweise das Anschweißen von Hakenflanschen 23, was gemäß Darstellung von Fig. 1 bereits erfolgt ist.

Um die Größenverhältnisse darzustellen, ist auch ein Bearbeiter 25 gezeigt.

Die Aufhängung der oberen Seile 15 und unteren Seile 13 erfolgt über Kran- bzw. Seilwinden 27, die mit einer Steuereinrichtung (nicht dargestellt) verbunden sind und individuell ansteuerbar und betätigbar sind. Mit Hilfe der Betätigung der Seilwinden können die Seile 13, 15 eingefahren bzw. ausgefahren werden, wodurch es möglich ist, die Aufnahmevorrichtung 9 in eine jegliche beliebige Position innerhalb des Bearbeitungsraums 17 zu bewegen.

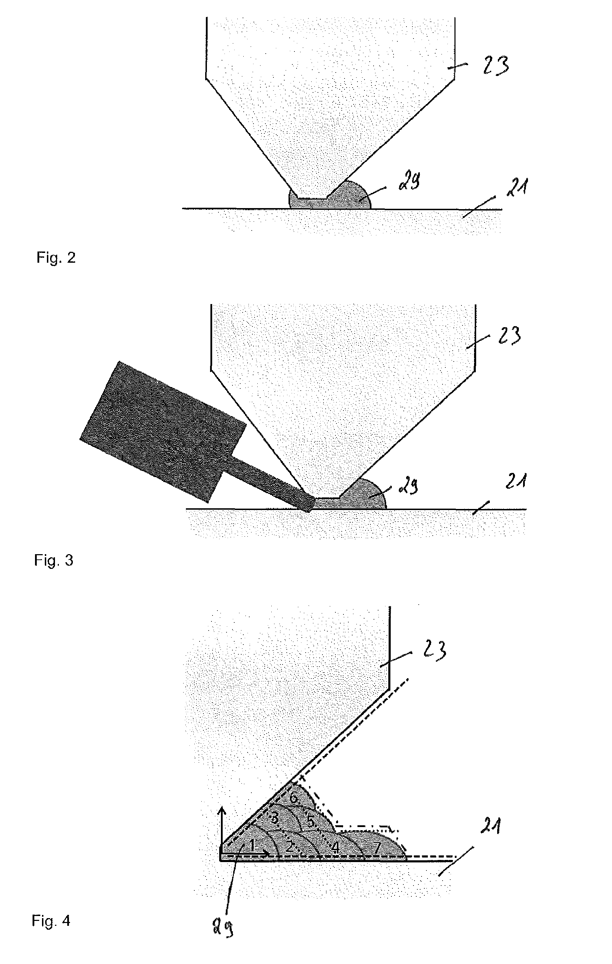

Nachfolgend wird Bezug genommen auf die Figuren 2 bis 4, in denen der Aufbau einer Schweißverbindung schematisch dargestellt ist. Beispielhaft wird das Verbinden mittels Schweißen eines Hakenflansches 23 mit dem Werkstück 21 dargestellt. Wie in Fig. 2 dargestellt, wurde zunächst das Bauteil 21 abgescannt und der Ort des anzubringenden Hakenflansches 23 (s. Fig. 1) ermittelt. Aus den erfassten Daten konnte der Ort der Nahtwurzel 29 erfasst werden und die Daten dem Schweißroboter 11 übermittelt werden. Dieser hat dann die Nahtwurzel 29 von der einen Seite - rechte Seite in Fig. 2 - erzeugt. Gemäß klassischem Schweißverfahren erstreckt sich die von einer Seite eingebrachte Nahtwurzel 29 auf die Gegenseite und muss entsprechend gefugt werden. Dies geschieht entsprechend Fig. 3 mit Hilfe eines kleinen Fräsers, der ebenfalls mittels Bearbeitungsvorrichtung 11 entlang der vorprogrammierten Bahn geführt wird.

Nach erneutem Erfassen der Ortsdaten der Nahtwurzel 29 erfolgt dann die Programmierung der in Fig. 4 dargestellten Schweißnahtlage 2 und nach deren Einbringen und erneutem Scannen der weitere Aufbau der Schweißnahtlagen 3, 4, 5 usw.

In Fig. 4 ist nur die eine rechte Seite der Schweißverbindung zwischen Hakenflansch 23 und Werkstück bzw. Bauteil 21 dargestellt. Ein entsprechender Aufbau der Schweißnahtlagen auf der gegenüberliegenden Seite kann abwechselnd erfolgen, d. h. der Schweißroboter wechselt nach jeweils dem Schweißen einer Schweißnahtlage die Seite, Alternativ kann, wenn die Aufnahmevorrichtung 9 mit zwei Schweißrobotern bestückt ist, das Aufbauen der Schweißnahtlage auf beiden Seiten parallel und gegebenenfalls mit dem entsprechenden Abstand aufgrund der Anordnung der Schweißroboter an der Aufnahmevorrichtung 9 erfolgen.

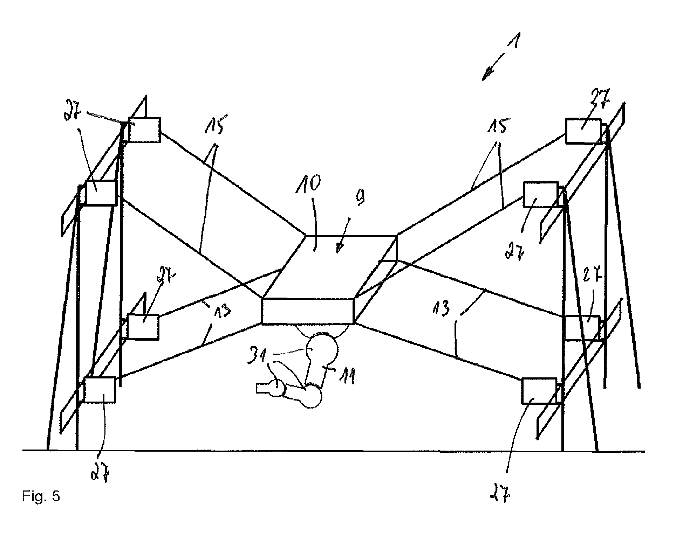

In Fig. 5 ist schematisch eine zweite Ausführungsform der erfindungsgemäßen Vorrichtung dargestellt. Die Aufnahmevorrichtung 9 ist in Form einer größeren Plattform 10 ausgebildet und die oberen vier Seile 15 sind am oberen Bereich der Aufnahmevorrichtung 9 befestigt und die unteren vier Seile 13 sind am unteren Endbereich der Aufnahmevorrichtung 9 befestigt. Vorteilhafterweise kann die Plattform 10 zusammen mit der/den Abtast- bzw. Bearbeitungsvorrichtung/en ausgetauscht werden.

Selbstverständlich ist es auch möglich, alle acht Seile 13 und 15 in einer Ebene an der Aufnahmevorrichtung zu befestigen.

Wie aus Fig. 5 weiterhin ersichtlich, ist die lösbar mit der Aufnahmevorrichtung verbundene Bearbeitungsvorrichtung 11 aus mehren Gelenken 31 aufgebaut, so dass sie selbst einen großen Bearbeitungsraum erreichen kann und somit auch komplizierteste Bearbeitungsvorgänge, wie beispielsweise eine Bearbeitung innerhalb von Hohlräumen des Werkstücks 21, bewerkstelligen kann.

Die Erfindung ist nicht auf die dargestellten Ausführungsformen beschränkt. Beispielsweise können insbesondere die oberen Seile 15 an am Gestell 3, insbesondere an den Querstreben 7, angeordneten Umlenkrollen von der Aufnahmevorrichtung 9 zu den Seilwinden 27 geführt sein. Dies ergibt eine Möglichkeit der schnelleren Bewegung in im Wesentlichen vertikaler Richtung.

In einer alternativen Ausführungsform sind die Seile 13 und/oder 15 lösbar an der Aufnahmevorrichtung 9 befestigt, beispielsweise mittels Karabinerhaken. Dadurch kann die Aufnahmevorrichtung 9 einfach und schnell entfernt werden. So werden das oder die sehr großen Werkstücke schnell zugänglich und können beispielsweise mittel eines (Hallen-)Krans weiter gehandhabt werden.

## Patentansprüche

1. Verfahren zum im Wesentlichen automatischen Bearbeiten, insbesondere Schweißen, sehr großer Werkstücke mittels wenigstens einer Abtast- und /oder Bearbeitungseinrichtung (11), insbesondere wenigstens einem Abtast- und / oder Bearbeitungsroboter (11), der an einer Aufnahmevorrichtung (9) befestigbar ist, wobei die Aufnahmevorrichtung (9) an einer Mehrzahl von bewegbaren Seilen (13, 15) aufgehängt und mittels dieser in eine beliebige Position in einem Bearbeitungsraum (17) bewegbar ist, in dem sich wenigstens eines der zu bearbeitenden großen Werkstücke (21) befindet, wobei das Verfahren die folgenden Schritte aufweist:
- Scannen des Werkstücks (21) durch den Roboter (11) und Erzeugen eines dreidimensionalen Datenbildes;
- Erzeugen der Daten der Schweißnahtbahn der Nahtwurzel (29) der gewünschten Schweißverbindung anhand des dreidimensionalen Datenbildes;
- Schweißen einer ersten Schweißnahtlage der Nahtwurzel (29) von einer Seite mittels Roboter anhand der erzeugten Daten;
- Fugen bzw. Fasen, insbesondere Fräsen der Nahtwurzel (29) der Schweißverbindung mittels Roboter auf der Gegenseite;
- Schweißen der ersten Schweißnahtlage der Gegenlage der Nahtwurzel (29) mittels Roboter;
- Scannen der erzeugten Schweißnaht durch den Roboter und Erzeugen eines dreidimensionalen Datenbildes;
- Erzeugen der nächsten Schweißnahtbahn für den Roboter anhand des erzeugten dreidimensionalen Datenbildes der vorher erzeugten Schweißnahtbahn, gegebenenfalls nach Korrektur der Schweißnahtbahndaten aufgrund einer Abweichung von Nahtlage und/oder Nahtform und Schweißen der nächsten Schweißnahtlage;
- Wiederholen der Schritte des Scannens der erzeugten Schweißnahtlage, des Erzeugens der nächsten Schweißnahtbahn gegebenenfalls nach Korrektur des Lagenaufbaus anhand der ermittelten Abweichungen und Schweißen der nächsten Schweißnahtlage bis zum vollständigen Lagenaufbau der zu erzeugenden Schweißnaht.

2. Verfahren nach Anspruch 1, **dadurch gekennzeichnet, dass** das Scannen optisch und berührungsfrei erfolgt.

3. Verfahren nach Anspruch 1 oder 2, **dadurch gekennzeichnet, dass** die erzeugten Schweißnahtlagen nach vorbestimmten Intervallen gereinigt bzw. genagelt und / oder auf deren Güte überprüft werden.

4. Verfahren nach einem der Ansprüche 1 bis 3, **dadurch gekennzeichnet, dass** die Bearbeitungsvorgänge weiterhin umfassen können: Brennen, Flexen der Nahtwurzel, Schleifen der Schweißnahtlagen bzw. des Werkstücks, Strahlen, insbesondere Sandstrahlen des Werkstücks, Lackieren des Werkstücks, Spritzverzinken des Werkstücks, Fräsen des Werkstücks, Bohren oder Schrauben des Werkstücks.

5. Verfahren nach einem der Ansprüche 1 bis 4, **dadurch gekennzeichnet, dass** es jegliche mechanische Bearbeitung mittels des wenigstens einen Bearbeitungsroboters anhand der erfassten dreidimensionalen Daten des Werkstücks umfasst.

6. Verfahren nach einem der Ansprüche 1 bis 5, **dadurch gekennzeichnet, dass** das Werkstück durch mehr als einen Roboter, verbunden mit der Aufnahmevorrichtung, erfasst und / oder bearbeitet wird.

7. Verfahren nach einem der Ansprüche 1 bis 6, **dadurch gekennzeichnet, dass** das Scannen des Werkstücks unter Zuhilfenahme der CAD-Daten des Werkstücks erfolgt.

8. Verfahren nach einem der Ansprüche 1 bis 6, **dadurch gekennzeichnet, dass** das Scannen des Werkstücks durch Handführen der Abtasteinrichtung erfolgt.

9. Vorrichtung (1) zum im Wesentlichen automatischen Bearbeiten, insbesondere zum Schweißen sehr großer Werkstücke (21) und insbesondere zum Durchführen des Verfahrens nach einem der Ansprüche 1 bis 8, welche aufweist:
eine Aufnahmevorrichtung (9) für wenigstens eine Abtasteinrichtung und /oder wenigstens eine Bearbeitungseinrichtung, insbesondere für wenigstens einen Abtast- und / oder Bearbeitungsroboter (11), die mittels einer Mehrzahl von steuerbaren Seilen (13, 15) in einem Bearbeitungsraum (17) aufgehängt und mittels der Seile (13, 15) in beliebige Stellungen in dem Bearbeitungsraum (17) verfahrbar ist, wobei die wenigstens eine Abtastvorrichtung in der Lage ist, das Werkstück (21) abzutasten und ein dreidimensionales Datenbild davon zu erstellen,
eine Programmier- und Steuereinrichtung, welche die erfassten dreidimensionalen Daten in entsprechende Bearbeitungsdaten umwandelt und diese dem wenigstens einen Bearbeitungsroboter (11) und der Steuerung der Seile (13, 15) überträgt, der die gewünschte Bearbeitung des Werkstücks (21) anhand dieser Daten ausführt.

10. Vorrichtung nach Anspruch 9, **dadurch gekennzeichnet, dass** jedes Seil (13, 15) über einen zugeordneten Motor, insbesondere eine Kran- oder Seilwinde (27), bewegbar ist, welcher durch die Steuereinrichtung gesteuert wird.

11. Vorrichtung nach Anspruch 9 oder 10, **dadurch gekennzeichnet, dass** die Seile (13, 15) an einem Gestell (3) aufgehängt und / oder an Wänden eines Gehäuses bzw. einer Halle aufhängbar sind und sich der Bearbeitungsraum (17) innerhalb des Gestells und/oder des Gehäuses bzw. der Halle befindet.

12. Vorrichtung nach einem der Ansprüche 9 bis 11, **dadurch gekennzeichnet, dass** wenigstens sieben Seile (13, 15) vorgesehen sind, die an der Aufnahmevorrichtung (9) angreifen, wobei einige davon (15) oberhalb und die restlichen davon (13) unterhalb der Aufnahmevorrichtung (9) aufgehängt bzw. aufhängbar sind.

13. Vorrichtung nach einem der Ansprüche 9 bis 12, **dadurch gekennzeichnet, dass** der Bearbeitungsroboter (11) als ein Schweißroboter, ein Fräsroboter, ein Sandstrahlroboter, ein Schleifroboter, ein Lackierroboter, ein Spritzverzinkroboter ein Bohrroboter, ein Brennroboter und/oder als ein Handhabungsroboter ausgebildet ist.

14. Vorrichtung nach einem der Ansprüche 9 bis 13, **dadurch gekennzeichnet, dass** die Seile an einem sich überwiegend vertikal erstreckenden Gestell derart aufgespannt sind, dass sie eine Bewegung der Aufnahmevorrichtung in im Wesentlichen vertikaler Richtung ermöglichen.

15. Vorrichtung nach einem der Ansprüche 9 bis 14, **dadurch gekennzeichnet, dass** der Abtastroboter als optischer berührungsfreier Abtastroboter ausgebildet ist.

16. Vorrichtung nach einem der Ansprüche 9 bis 15, **dadurch gekennzeichnet, dass** die Steuereinrichtung eine Programmiereinrichtung umfasst, welche anhand der erfassten geometrischen Daten des Werkstücks, insbesondere der geometrischen Daten der zu bearbeitenden Elemente die auszuführenden Bearbeitungsbahnen bzw. Bearbeitungsvorgänge erzeugt und dem wenigstens einen Bearbeitungsroboter überträgt.
